# EUROPEAN PATENT SPECIFICATION

(11) **EP 2 292 426 B1**
(45) Date of publication and mention of the grant of the patent: **05.03.2014**
(21) Application number: 10166453.0
(22) Date of filing: 18.06.2010
(51) Int. Cl.: B32B 15/14, B32B 17/02, F24F 13/02

(54) **Reinforced insulation panel with external coating for air distribution ducts**
Verstärkte Isolierplatte mit externer Beschichtung für Luftverteilungsleitungen
Panneau d'isolation renforcé doté d'un revêtement externe pour conduits de distribution d'air

(30) Priority: 28.08.2009 ES 200901808
(43) Date of publication of application: 09.03.2011
(73) Proprietor: Saint-Gobain Cristaleria, S.L., 28046 Madrid (ES)
(72) Inventor: Soriano Hoyuelos, Esther, 28046, Madrid (ES); Lopez Brunner, Luis, 28046, Madrid (ES); Lopez Belbeze, Gregorio, 28046, Madrid (ES)
(74) Representative: Isern-Jara, Nuria

(56) References cited:
- WO-A1-94/27082
- WO-A1-95/13185
- DE-U1- 9 001 730
- GB-A- 2 017 581
- US-A- 4 948 660
- US-A1- 2007 154 695

## Description

### Subject matter of the invention

This present invention refers to a reinforced insulation panel with an external coating for air distribution ducts, which contributes essential characteristics of novelty and appreciable advantages compared to the known methods and used for the same purposes in the current state of the art.

More particularly, the invention proposes the development of an insulation panel for the construction of hot or cold air distribution ducts, in which the panel is reinforced on the basis of an external covering for the core of the fibreglass wool panel, obtained from a double layer, made up from a first laminated element formed from a sheet of aluminium applied directly onto the external face of the panel core, and a second laminated element, applied to the former, formed from a sheet of woven fibreglass, which provides the panel with a high level of reinforcement and a final external decorative finish that is required for same, at the same time as a high degree of fire resistance.

The field of application is clearly included in the industrial sector involved in the manufacture of components for air ducting installations.

### Background and Summary of the invention

The experts in the field are well aware of the fact that the use of self supporting ducts for air distribution, made from insulating mineral wool panels, especially fibreglass wool panels, constitutes an extended and widely used practice, in which the stated insulation panels have to be made in such a way as to fulfil certain technical features that are regulated by the current Thermal Installation Regulations for Buildings that are in force.

The air distribution ducts are made up from a great multiplicity of panels with low thermal conductivity, which permit the transfer of cold and hot air, with some minimal energy losses. The panels are normally provided with some arrangements that allow for the linking together of successive panels to one another along the duct, for which the adjacent edges of said panels have some complementary arrangements that make the quick linking together easier. The joints between the panels have to be closed or sealed in some way, so as to prevent unwanted leaks that would inherently reduce the performance of the installation.

The stated panels have an external coating made in such a way that they have some basic characteristics of mechanical resistance (so as to ensure a specific resistance of the duct to the pressure exercised by the air driven through it), air tightness (to prevent air leaks of the air through the walls of the duct), and a vapour barrier (to prevent condensations on the insulation). These properties are currently provided by a complex sheet glued to the core of the fibreglass wool panel, made up of Kraft paper, fibreglass mesh and a final finish with a sheet of aluminium that has a thickness of a few microns which provides the air tightness that is necessary.

Therefore, the external aspect that an air distribution duct has on the basis of fibreglass wool panels corresponds to the so called "external coating", this being the metallic aspect of the aluminium sheeting. This situation means that when the distribution duct must be integrated into any location, in a location that is visible to the users of the location, it is desirable to give the air duct a final finish that fits in with the decorative appearance of the location itself where it is to be installed. In order to do this it is necessary to adopt other complementary solutions, such as those which are stated below:
- To paint the external surface of the air distribution duct with the use of plastic paints or lacquered spray finishes.
- To cover the duct with a decorative material that does not harm the air tightness of the duct, or equally,
- To conceal the duct by means of the installation of a false ceiling.

Clearly, any of the stated solutions takes time and resources, which is reflected in an increased cost for the installation. In addition, frequently there are also difficulties in the execution in certain installation areas, arising from the lack of space available for the introduction of the tools or equipment that are necessary to carry out these operations.

But in spite of the disadvantages that have just been mentioned, there are other disadvantages that pose significant additional risks directly related to the type of finish that is adopted for the air distribution duct. In the first place, when paint is applied to the external surface of the air distribution panels there is a change in the classification of the reaction to fire for the assembly in line with the primer used, since, as is well known, the majority of paints are based on inflammable materials.

On the other hand, a duct intended for installation above a false ceiling, protected by the latter, is not considered suitable for installation in a satisfactory manner on the inside of a location in a 'visible' position, this being without any additional protection, due to its property of resistance to perforation (punching of holes) provided by the assembly made up from the Kraft paper and the fibreglass mesh, together with the external aluminium sheet, being lower than would be desirable in order to guarantee the integrity of the surface appearance.

Taking the disadvantages into consideration that are associated to the air duct panels that are currently used in the state of the art, this present invention has proposed the construction of a reinforced insulation panel as the main objective, which is provided with an external coating that is capable of being adapted to the differing demands, with which effective solutions are provided for the problems stated. This objective has been fully achieved by means of the panel proposed by this present invention, the structural characteristics of which are contained in the characterising part of the annexed Claim 1.

The special and preferred structural characteristics according to the invention are defined in the characterising part of the dependent claims.

In essence, the panel proposed by the invention consists of a rigid decorative-reinforced insulation panel, typically made from high density fibreglass wool, suitably configured at the edges of the joints, in accordance with that which is conventional so as to enable quick and easy connection between adjoining successive panels, the external side of said panel (this being, the face that is 'visible' or 'exposed') having a coating with some substantially improved features when compared with the conventional coatings, said coating being structured on the basis of a first sheet of aluminium, directly in contact with the fibreglass wool to which it is closely bonded, and which provides the relevant air tightness and the vapour barrier so as to prevent unwanted condensation, and a second sheet or coat covering the first, forming the final finish to the panel, made from a woven fibreglass. This second fibreglass woven sheet not only reinforces the duct and maintains it in good operating conditions against the aggressiveness of the environment, both at the time of the installation and equally during the useful working life of the latter, but moreover allows it to be given a surface finish that can be chosen on the basis of very different criteria, from the point of view of colour or from the structural resistance point of view, achieving with it an assembly with finish characteristics that can easily be integrated into the environment or surroundings in which it is installed.

In particular, the reinforcement layer can be chosen with some features such as variable texture or variable colour (from amongst a diversity of possible options), which determine an appearance for the duct in its visibly installed position, adapted to the decorative needs of the setting where the duct is installed without the need to use paints or other external primers, avoiding the need to conceal the duct behind a false ceiling or something similar, and a reaction to fire for the assembly (duct, insulation, decorative element and reinforcement) in accordance with the demands of the installation, all of this offering a resistance to punching of holes that is compatible with the normal installation conditions.

As will be understood, a reinforced panel constructed in the manner as proposed by the present invention shows significant advantages compared to the normal panels in the current state of the art, amongst which the following can be highlighted:
- Reduction of the labour and materials used in the construction of the ducts network for air distribution installations, when they make up a part of the interior design and when the needs of the project have to have a finish with a difference in colour to that of the external aluminium sheet, with the resulting financial saving;
- It improves and makes the control of the work easier, guaranteeing the properties of the assembly: duct, insulation, decorative element and reinforcement; it enables the classification to fire resistance to be perfectly defined;
- Greater protection against external agents, as on forming a part of the interior design the ducts are exposed to a greater number of aggressions;
- Greater mechanical rigidity of the duct so as to be able to transport greater air flows;
- It allows the designers to plan visible ducts in accordance with the aesthetics of the location, using a single product, likewise to design larger spaces as the duct remains visible without the need for false ceilings;
- Finally it eliminates any need for final finish operations, such as false ceilings, painting of the external surface of the air distribution duct, or the inclusion of additional reinforcement material, with the resulting reduction of materials, labour and associated costs.

### A Brief Description of the Drawings

These and other characteristics and advantages of the invention will become more evident from a detailed description that follows of an example of a preferred embodiment of same, that is made by way of illustration and without being by way of limitation with reference to the attached drawings, in which:
Figure 1 is a diagrammatic view, in perspective from above, of an end portion of a fibreglass wool panel with an external reinforced coating according to the proposal of this present invention, and
Figure 2 is a drawing to represent a portion of air distribution duct constructed from reinforced insulation panels according to the invention.

### A description of a preferred embodiment

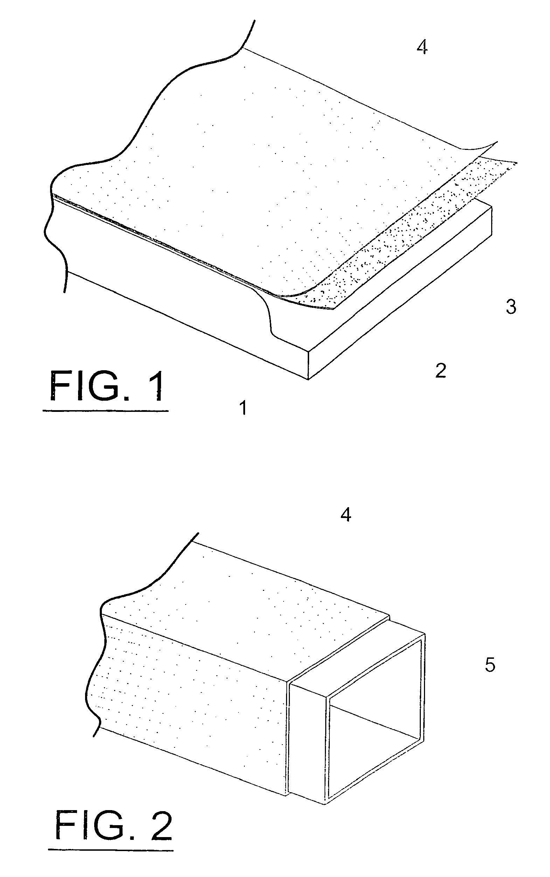

As has been mentioned above, the detailed description of the reinforced insulation panel developed by means of the present invention is going to be carried out below with the help of the annexed drawings, using the same numerical references to designate equal or similar parts. Hence, in the first place with reference to the representation in Figure 1, a perspective view can be seen of a portion of a mineral wool panel (1), with a density being between 50 and 120 kg/m², typically fibreglass wool with a density of around 75 kg/m², the end edge (2) of which is shaped in such a way as to make it easily join to the edge of the next corresponding panel joining to it in a complementary manner. Panel (1), as has been said, has a coating on the external surface that gives it structural reinforcement properties which is higher than those of the prior technique, together with an appearance or final finish that can have differing textures and colours, to be chosen in line with the needs or requirements of the user. This coating consists of a combination of both of the sheet elements, of which a first element, in direct contact with the external surface of the core (1) of the fibreglass wool panel, and it is closely bonded to said surface preferably by means of gluing with the help of a thermo-plastic or similar material, consisting of a sheet of aluminium, marked with reference number (3), with a predetermined thickness in line with the insulation needs and air tightness required, and a second element marked with reference number (4) which completely covers the latter, which it supports, and it consists of a woven sheet constructed from a fibreglass base with a closed mesh texture. This element forms the visible face of the panel.

By preference, the woven fibreglass that forms sheet (4) for the external coating, consists of a multiplicity of fibreglass fibres or filaments that are interlaced into each other and impregnated with a polymer that keeps them held together. The framework can have a variable density texture, which can likewise be adjusted and regulated for the degree of reinforcement and mechanical resistance provided by this element to the entirety of the panel against external aggressions such as punching of holes or others of a similar nature, in addition to enabling the user to adopt the final appearance and colour that is required, in keeping with the surroundings into which the duct is going to be placed, and without the need to apply paints or other surface finishes.

By way of illustration, the woven fibreglass will have a gram weight of between 100 and 400 g/m², preference being given to at least 125 g/m², so as to obtain a satisfactory cover, sufficiently sealed so as to prevent the underlying aluminium layer from being seen. It is preferable for the woven fibreglass to have an openness factor that is less than 20%.

Due to the fact that the woven fibreglass has a reinforcement feature against external aggressions, the sheet of aluminium can be selected with a minimal thickness that is sufficient to provide air tightness for the external coating. Hence, an aluminium sheet thickness in the order of between 8 to 15 µm is in general enough, whilst the panels of the prior technique normally use an aluminium thickness of several dozen microns, typically around 40 microns.

By preference layers (3) and (4) of aluminium sheet and fibreglass base sheet, respectively, which make up the external coating of core (1) of the panel are held to each other by means of glue. In an advantageous manner it has been noticed that a limited amount of glue is enough to stably fix layer (4) onto the aluminium sheet (3), in such a way that gluing of the protection does not represent disadvantages against the reaction to fire for the assembly of the product. By preference a glue with a low calorific power is used in such a way that it provides a minimal reaction to fire (or where appropriate, a fireproof adhesive). Preference is for, by way of example, a polyurethane type adhesive which can be applied at the rate of 5 to 10 g/m² of the laminated assembly.

Layers (3) and (4) of aluminium sheet and the fibreglass base sheet, respectively, that make up the external coating of the fibreglass wool core (1) of the panel, are such that the bond can be made on the same line in which the base panel production is carried out. It is possible that the material of core (1) that forms the base panel on the side that is going to have the stated sheet layers (3) and (4) is provided with a surface veil, preferably made from a mineral fibre base such as fibreglass.

For this purpose external coating material can be assembled on the material of the core (1) by means of an adhesive solution or suspension, by spraying or by the application of a layer, or equally by means of a thermo-plastic material such as a hot-melt adhesive applied by spraying, or by means of a thermo-active polymer film, for example a polyethylene film. The coating can therefore be prepared in the form of a laminated complex with a thermo-plastic polymer layer and with the aluminium sheet, this complex being applied on the production line to the material of the core (1) of mineral wool by heating, softening and compression. The amount of the adhesive is mainly adapted in line with the general resistance of the coating required (in particular, the quality of the gluing and the resistance to delamination), and the calorific power of the adhesive in regard to the required reaction to fire. As an example, a complex of a satisfactory quality is obtained with an amount of adhesive of around 30 to 50 g/m², using a polyolefin glue.

The complex, after the application of the coating obtained on the basis of both laminated elements (3) and (4), enables the building of air distribution ducts (5), as shown by way of illustration in Figure 2, in which the external appearance is provided, as has been said, with the fibreglass element (4). In addition, the woven fibreglass finish can be such that the surface has a printed or relief texture or with relief motifs made during the weaving process.

It is not considered to be necessary to make the contents of this present description longer so that an expert in the field can understand its scope and the advantages that can be derived from same, likewise to carry out the practical embodiment of its objective.

In spite of the above, and as the description made solely corresponds to an example of a preferred embodiment, it shall be understood that within the essence of the invention multiple modifications and variations can be introduced to the details, likewise included in the scope of the invention, and it can particularly affect the characteristics such as the shape, size or the materials from which it is made, or any others that do not alter the invention as described and defined in the claims that follow.

## Claims

1. A reinforced insulating panel with an external coating for air distribution ducts capable of being installed in enclosed places in an open 'visible' position, in which the panel is composed of a mineral wool core (1), especially fibreglass wool, provided with an external coating, **characterised in that** this external coating is made from two laminated elements (3, 4),
of which the first laminated element (3) consists of a sheet or layer of aluminium, joined by means of a gluing operation onto the external surface of the core (1) of the mineral wool,
and of which a second laminated element (4) applied onto the first laminated element (3), consisting of a reinforcing and protective layer, made from a woven fibreglass base with a closed mesh texture, so that it conceals the subjacent aluminium layer, completely covering the subjacent aluminium layer.

2. An insulating panel according to claim 1, **characterised in that** the woven fibreglass has an openness factor of less than 20%.

3. An insulating panel according to claims 1 to 2, **characterised in that** the woven fibreglass has a surface mass of between 100 and 400 g/m².

4. An insulating panel according to any one of the claims 1 to 3, **characterised in that** the woven fibreglass is coloured by means of a spray compound or by the application of layers, on the basis of a bonding agent and a colour or pigment.

5. An insulating panel according to any one of the claims 1 to 4, **characterised in that** the woven fibreglass has a printed or relief texture, or with relief motifs which are made in the weaving process.

6. An insulating panel according to any one of the claims 1 to 5, **characterised in that** the aluminium sheet (3) has a thickness of between 8 and 15 microns.

7. An insulating panel according to any one of the claims 1 to 6, **characterised in that** the woven fibreglass and the aluminium sheet are joined together by means of an adhesive with a low calorific power or that is fire resistant.

8. An insulating panel according to any one of the claims 1 to 7, **characterised in that** the external coating is joined to the mineral wool core (1) by means of a thermo-plastic or thermo-setting, hot-melt adhesive or that is in solution.

9. An insulating panel according to any one of the claims 1 to 8, **characterised in that** the external coating is joined directly to the mineral wool core (1) in close contact with the latter, or equally by means of a surface veil such as a fibreglass veil.

10. An insulating panel according to any one of the claims 1 to 9, **characterised in that** the mineral wool is glass or rock wool, with a density of between 50 and 120 kg/m².

11. An insulating panel according to any one of the claims 1 to 10, **characterised in that** the panel is shaped with edges (2) so as to provide a connection with a complementary arrangement for the edge of the next panel.

12. An air distribution duct, particularly for the transport of cold or hot air, is made up from an assembly of panels according to any one of the claims 1 to 11 with an airtight joint between successively linked panels.

## Patentansprüche

1. Verstärkte Dämmplatte mit Außenbeschichtung für Luftleitungen zum Einbau in geschlossene Räume in "sichtbar" geöffneter Position, wobei die Dämmplatte aus einem mit einer Außenbeschichtung versehenen Kern aus Mineralwolle (1), insbesondere aus Glasfaserwolle besteht, **dadurch gekennzeichnet, dass** diese Außenbeschichtung aus Folienelementen (3, 4) besteht,
von denen das erste Folienelement (3) aus einer Aluminiumfolie, die auf die Außenfläche des Kerns (1) aus Mineralwolle aufgeklebt wurde, besteht
und das zweite, auf das erste Folienelement (3) aufgebrachte Folienelement (4) aus einer Verstärkungs- und Schutzschicht besteht, die aus einer geschlossenen Textilstruktur auf Glasfaserbasis hergestellt ist, so dass sie die darunter liegende Aluminiumschicht verbirgt indem sie diese Aluminiumschicht vollständig abdeckt.

2. Dämmplatte nach Anspruch 1, **dadurch gekennzeichnet, dass** das Glasfasergewebe einen Öffnungsfaktor von weniger als 20% aufweist.

3. Dämmplatte nach den Ansprüchen 1 bis 2, **dadurch gekennzeichnet, dass** das Glasfasergewebe eine Flächenmasse von 100 bis 400 g/m² aufweist.

4. Dämmplatte nach einem der Ansprüche 1 bis 3, **dadurch gekennzeichnet, dass** das Glasfasergewebe durch Pulverbeschichtung oder Aufbringung von Schichten aus Bindemittel und Farbstoff oder Pigment mit einer Farbe versehen wird.

5. Dämmplatte nach einem der Ansprüche 1 bis 4, **dadurch gekennzeichnet, dass** das Glasfasergewebe eine Druck- oder Relieftextur aufweist, oder Reliefmotive, die beim Webverfahren hergestellt wurden.

6. Dämmplatte nach einem der Ansprüche 1 bis 5, **dadurch gekennzeichnet, dass** die Aluminiumfolie (3) eine Stärke von 8 bis 15 Mikron aufweist.

7. Dämmplatte nach einem der Ansprüche 1 bis 6, **dadurch gekennzeichnet, dass** das Glasfasergewebe und die Aluminiumfolie durch einen Klebstoff miteinander verbunden sind, der einen niederen Heizwert hat bzw. feuerbeständig ist.

8. Dämmplatte nach einem der Ansprüche 1 bis 7, **dadurch gekennzeichnet, dass** die Außenbeschichtung mit dem Kern (1) aus Mineralwolle thermoplastisch bzw. durch Thermoaushärtung, oder durch einen Schmelzklebstoff oder eine Klebstofflösung verbunden ist.

9. Dämmplatte nach einem der Ansprüche 1 bis 8, **dadurch gekennzeichnet, dass** die Außenbeschichtung direkt mit dem Kern (1) aus Mineralwolle verbunden ist und zwar in engem Kontakt mit demselben oder auch über ein Oberflächenvlies wie etwa ein Glasfaservlies.

10. Dämmplatte nach einem der Ansprüche 1 bis 9, **dadurch gekennzeichnet, dass** die Mineralwolle Glasfaserwolle oder Steinwolle mit einer Dichte von 50 bis 120 kg/m² ist.

11. Dämmplatte nach einem der Ansprüche 1 bis 10, **dadurch gekennzeichnet, dass** die Dämmplatte mit Rändern (2) ausgestaltet ist, die zur Herstellung einer Verbindung mit einer komplementären Einrichtung am Rand der folgenden Dämmplatte dienen.

12. Luftleitung, insbesondere zur Beförderung von Kalt- oder Heißluft, die aus Dämmplatten nach einem der Ansprüche 1 bis 11 mit einer dichten Verbindung zwischen den nacheinander miteinander verbundenen Dämmplatten hergestellt wird.

## Revendications

1. Panneau isolant renforcé, doté d'un revêtement extérieur pour conduits de distribution d'air susceptible d'être mis en place dans des endroits clos en position « visible » et ouverte, ledit panneau est composé d'une âme en laine minérale (1), plus particulièrement en laine de fibre de verre, dotée d'un revêtement extérieur, **caractérisé en ce que** ce revêtement extérieur est composé de deux éléments laminés (3, 4),
dont le premier élément laminé (3) se compose d'un feuillet ou couche d'aluminium, fixé par une opération de collage à la surface extérieure de l'âme (1) en laine minérale, et
dont le second élément laminé (4) appliqué sur le premier élément laminé (3) se compose d'une couche de renfort et de protection réalisée à base de fibre de verre avec une texture de maille serrée de manière à masquer la couche d'aluminium sous-jacente, couvrant complètement ladite couche d'aluminium sous-jacente.

2. Panneau isolant, selon la revendication 1, **caractérisé en ce que** le tissu en fibre de verre possède un facteur d'ouverture inférieur à 20 %.

3. Panneau isolant, selon les revendications 1 à 2, **caractérisé en ce que** la fibre de verre possède un grammage superficiel compris entre 100 et 400 g/m².

4. Panneau isolant, selon l'une des revendications 1 à 3, **caractérisé en ce que** le tissu en fibre de verre est coloré par un composé pulvérisé ou par application en couches à base d'un liant et d'un colorant ou pigment.

5. Panneau isolant, selon l'une des revendications 1 à 4, **caractérisé en ce que** le tissu en fibre de verre possède une texture estampée ou en relief, ou avec des motifs en relief formés au cours du processus de tissage.

6. Panneau isolant, selon l'une des revendications 1 à 5, **caractérisé en ce que** le feuillet d'aluminium (3) possède une épaisseur comprise entre 8 et 15 microns.

7. Panneau isolant, selon l'une des revendications 1 à 6, **caractérisé en ce que** le tissu en fibre de verre et le feuillet d'aluminium sont réunis au moyen d'un adhésif de faible pouvoir calorique ou ignifuge.

8. Panneau isolant, selon l'une des revendications 1 à 7, **caractérisé en ce que** le revêtement extérieur est fixé à l'âme en laine minérale (1) au moyen d'un adhésif de type thermoplastique ou thermodurcissable, thermofusible ou en solution.

9. Panneau isolant, selon l'une des revendications 1 à 8, **caractérisé en ce que** le revêtement extérieur est collé directement sur l'âme en laine minérale (1) au contact intime de celle-ci ou bien à travers un voile superficiel tel qu'un voile en fibre de verre.

10. Panneau isolant, selon l'une des revendications 1 à 9, **caractérisé en ce que** la laine minérale est de la laine de verre ou de roche de densité comprise entre 50 et 120 kg/m².

11. Panneau isolant, selon l'une des revendications 1 à 10, **caractérisé en ce que** le panneau est formé de bords (2) pour permettre de le raccorder à un bord d'un panneau contigu présentant un dispositif complémentaire.

12. Conduit de distribution d'air, plus particulièrement conduit d'air froid ou chaud constitué d'un ensemble de panneaux selon l'une quelconque des revendications 1 à 11, comprenant une jonction étanche entre des panneaux successivement contigus.
